# EUROPÄISCHE PATENTSCHRIFT

(11) **EP 2 361 355 B1**
(45) Veröffentlichungstag und Bekanntmachung des Hinweises auf die Patenterteilung: **31.10.2012**
(21) Anmeldenummer: 09783326.3
(22) Anmeldetag: 23.09.2009
(51) Int. Cl.: F16M 11/12

(54) **FESTSTELLBREMSE FÜR EINEN STATIVKOPF**
STOP BRAKE FOR A TRIPOD HEAD
FREIN D'IMMOBILISATION POUR TÊTE DE TRÉPIED

(30) Priorität: 02.12.2008 DE 202008015942 U
(43) Veröffentlichungstag der Anmeldung: 31.08.2011
(73) Patentinhaber: Camera Dynamics GmbH, 85386 Eching (DE)
(72) Erfinder: DAISENBERGER, Bartholomäus, 82362 Weilheim (DE); WESSELS, Dagmar, 80933 München (DE); GIERSIEPEN, Martin, 81375 München (DE)
(74) Vertreter: HOFFMANN EITLE
(86) Internationale Anmeldenummer: PCT/EP2009/062321
(87) Internationale Veröffentlichungsnummer: WO 2010/063501

(56) Entgegenhaltungen:
- DE-B- 1 256 901
- DE-U1- 7 712 121
- FR-A1- 2 643 433
- US-A- 2 111 012
- US-A- 5 092 433

## Beschreibung

### Technisches Gebiet

Die vorliegende Erfindung betrifft eine Feststellbremse für einen Stativkopf, insbesondere für Film- oder Fernsehkameras, gemäß dem Oberbegriff des Anspruchs 1. Die Feststellbremse hat einen im Wesentlichen zylinderförmigen Bremssattel, der einen Grundkörper zum Einbringen in eine in einem Gehäuseteil des Stativkopfs ausgebildete Aufnahmeöffnung und einen Bremsbacken zum Eingriff mit einer im Stativkopf vorgesehenen Bremsscheibe aufweist. Die Feststellbremse hat außerdem Feststellmittel, um den Bremsbacken in Eingriff und außer Eingriff mit der Bremsscheibe zu bringen.

### Stand der Technik

Stativköpfe der eingangs genannten Art, wie sie aus der gattungsbildenden US-A-5,092,433 bekannt sind, sind an sich bekannt und dienen zum Verschwenken der Kamera um zumindest zwei zueinander senkrechte Achsen.

Beispielsweise offenbart DE 40 09 026 C1 einen solche Stativkopf mit einer Schwenkeinrichtung zum Verschwenken der Kamera um eine vertikale Schwenkachse und einer Neigeeinrichtung zum Neigen der Kamera um eine horizontal verlaufende Neigeachse.

Einige dieser bekannten Stativköpfe verfügen über eine Feststellbremse, mit der die Kamera in verschiedenen Schwenk- und/oder Neigepositionen arretiert werden kann. In einer bekannten Ausgestaltung verfügen diese Feststellbremsen über einen Bremssattel, der in eine Aufnahmeöffnung in einem Gehäuseteil des Stativkopfs einbringbar ist. Mittels einer Feststellschraube kann der Bremssattel in Eingriff und außer Eingriff mit einer Bremsscheibe gebracht werden.

In den herkömmlichen Feststellbremsen ist jedoch aufgrund von Toleranzen in den Abmessungen der verwendeten Bauteile ein Spiel vorhanden, insbesondere zwischen dem Bremssattel und der Aufnahmeöffnung im Gehäuseteil. Dadurch ist auch bei arretierter Feststellbremse noch eine leichte Wackelbewegung der Kamera möglich. Dies wirkt sich bei der Verwendung der Kamera störend aus.

### Darstellung der Erfindung

Der vorliegenden Erfindung liegt die Aufgabe zugrunde, einen Stativkopf mit Feststellbremse zu schaffen, mit dem die Kamera möglichst spielfrei in der gewünschten Schwenk - und/oder Neigestellung arretiert werden kann.

Diese Aufgabe löst ein Stativkopf gemäß dem Patentanspruch 1.

Demzufolge ist im Bereich des Außenumfangs des Grundkörpers des Bremssattels ein Spreizabschnitt vorgesehen, der beim Ineingriffbringen des Bremsbackens mit der Bremsscheibe radial auswärts in Richtung einer Innenwand der Aufnahmeöffnung ausgelenkt wird.

Diese Auslenkung des Spreizabschnitts des Bremssattels in Richtung der Innenwand der Aufnahmeöffnung bewirkt, dass der Außenumfang des Grundkörpers des Bremssattels fest gegen die Innenwand der Aufnahmeöffnung gedrückt und ein Spiel zwischen Bremssattel und Aufnahmeöffnung vermieden oder zumindest verhindert wird.

Bevorzugte optionale Merkmale sind in den abhängigen Patentansprüchen wiedergegeben.

Die radiale Auslenkung des Spreizabschnitts beim Ineingriffbringen des Bremsbackens mit der Bremsscheibe erfolgt vorzugsweise mittels zweier komplementärer und relativ zueinander beweglicher Keilflächen.

Die Feststellmittel, um den Bremsbacken in Eingriff und außer Eingriff mit der Bremsscheibe zu bringen, sind vorzugsweise eine Feststellschraube mit einem Außengewinde, das mit einem im Grundkörper des Bremssattels ausgebildeten Innengewinde zusammenwirkt. Beim Anziehen der Feststellschraube wird der Bremssattel gegen die Bremsscheibe festgezogen. In diesem Fall bilden das Außengewinde an der Feststellschraube und das Innengewinde im Grundkörper des Bremssattels die beiden komplementären und relativ zueinander beweglichen Keilflächen, die die radiale Auslenkung des Spreizabschnitts des Bremssattels bewirken.

Bezüglich der Ausgestaltung des Spreizabschnitts besteht die Möglichkeit, dass der Spreizabschnitt ein integraler Bestandteil des Grundkörpers des Bremssattels ist, der beim Ineingriffbringen des Bremsbackens mit der Bremsscheibe zumindest teilweise in Richtung einer Innenwand der Aufnahmeöffnung aufgeweitet wird. Durch diese Aufweitung des Spreizabschnitts des Bremssattels wird der Bremssattel in der Aufnahmeöffnung festgeklemmt. In diesem Fall kann der Grundkörper des Bremssattels als Spreizabschnitt beispielsweise zumindest einen Flügel aufweisen, welcher beim Ineingriffbringen des Bremssattels mit der Bremsscheibe in Richtung der Innenwand der Aufnahmeöffnung auslenkbar ist.

Alternativ kann der Spreizabschnitt aber auch ein separates Spreizelement sein, das am Außenumfang des Grundkörpers des Bremssattels angeordnet ist. Als Spreizelement kann beispielsweise ein separater Spreizring dienen, der um den Außenumfang des Grundkörpers des Bremssattels herum angeordnet ist. Ebenso kann am Außenumfang des Grundkörpers des Bremssattels zumindest ein verschiebliches Keilelement als Spreizelement angeordnet sein. In beiden Fällen kann die radiale Auslenkung des Spreizabschnitts beim Ineingriffbringen des Bremsbackens mit der Bremsscheibe wiederum mittels zweier komplementärer und relativ zueinander beweglicher Keilflächen erfolgen, von denen eine am Spreizelement und die andere am Grundkörpers des Bremssattels ausgebildet ist.

### Kurze Beschreibung der Zeichnungen

In den anliegenden Zeichnungen ist
- Fig. 1: eine Ansicht eines Kamerastativs mit Stativkopf und darauf aufgesetzter Kamera;
- Fig. 2: eine Explosionsansicht einer ersten bevorzugten Ausführungsform der erfindungsgemäßen Feststellbremse;
- Fig. 3: eine Schnittansicht der Feststellbremse aus Fig. 2;
- Fig. 4: eine Perspektivansicht, Frontansicht und Schnittansicht eines Bremssattels der Feststellbremse aus Fig. 2;
- Fig. 5: eine Veranschaulichung der in einem Gewinde der Feststellbremse wirkenden Kräfte;
- Fig. 6: eine Perspektivansicht eines Bremssattels und eines Spreizrings einer Feststellbremse gemäß einer zweiten bevorzugten Ausführungsform der Erfindung;
- Fig. 7: eine Schnittansicht der Feststellbremse gemäß der zweiten bevorzugten Ausführungsform;
- Fig. 8: eine Veranschaulichung der in einem der Feststellbremse gemäß Figur 6 wirkenden Kräfte; und
- Fig. 9: eine Perspektivansicht eines Bremssattels und zweier Spreizelemente einer Feststellbremse gemäß einer dritten bevorzugten Ausführungsform der Erfindung.

### Ausführliche Beschreibung von bevorzugten Ausführungsformen der Erfindung

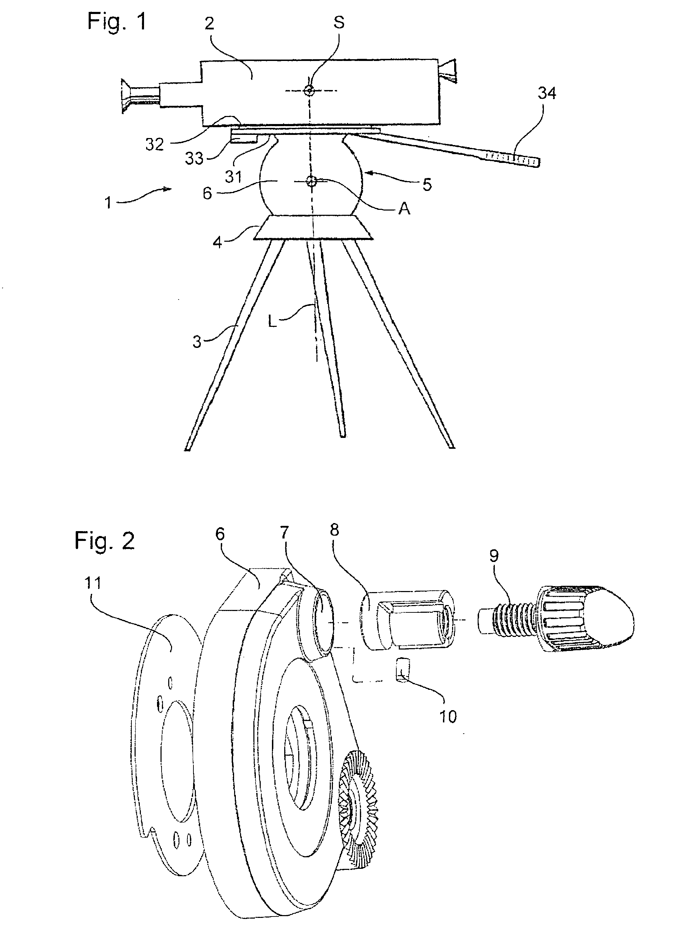

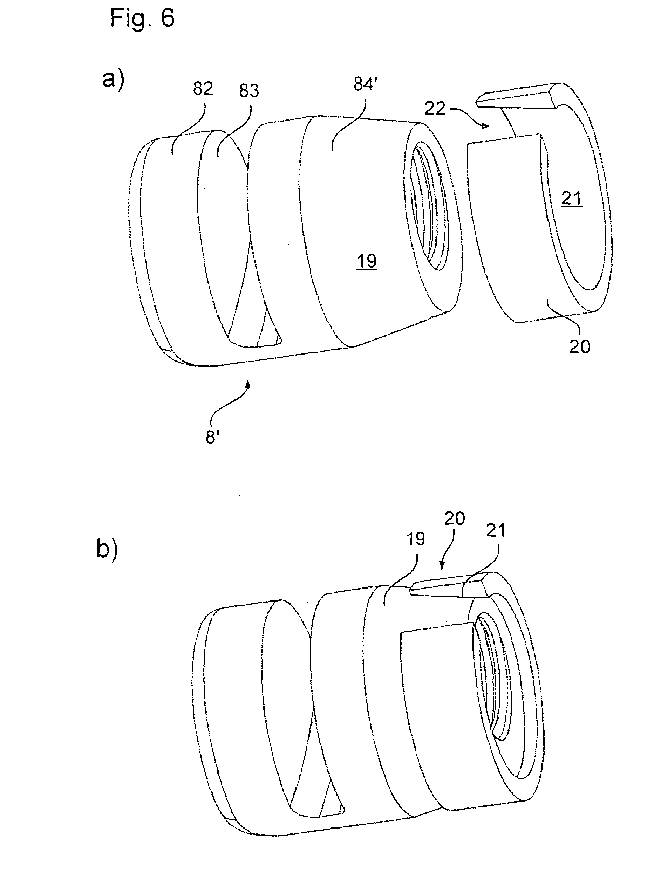

Eine erste bevorzugte Ausführungsform der erfindungsgemäßen Feststellbremse zeigen die Figuren 1 bis 5. Fig. 6 zeigt eine zweite bevorzugte Ausführungsform.

Fig. 1 zeigt einen Stativkopf 1 für eine Filmkamera 2. Der Stativkopf 1 ist auf einem dreibeinigen Stativ 3 aufgesetzt und besteht aus einer Schwenkeinheit 4 und einer Neigeeinheit 5. Mittels der Schwenkeinheit 4 kann die Kamera 2 um eine vertikale Schwenkachse L herum verschwenkt werden, und mittels der Neigeeinheit 5 kann die Kamera 2 um eine horizontal verlaufende Neigeachse A herum geneigt werden.

Dazu besteht die Neigeeinheit 5 im Wesentlichen aus einem um die Neigeachse A neigbaren Rotor 6 sowie einem mit dem Stativ 3 verbundenen Stator (nicht dargestellt). Der Rotor 6 ist mit einer Aufnahmeplattform 31 verbunden. Die Kamera 2 sitzt ihrerseits auf einer Schlittenanordnung 32, die in der Aufnahmeplattform 31 mit Hilfe einer Stelleinrichtung 33 verschiebbar ist. Mittels Handgriffen 34 kann der Stativkopf 1 um die horizontale Neigeachse A geneigt und um die vertikale Schwenkachse L geschwenkt werden.

Das Bezugszeichen S bezeichnet den Schwerpunkt der Kamera 2.

Um nun die Kamera 2 in jeder gewünschten Neigestellung arretieren zu können, verfügt die Neigeeinheit 5 über eine Feststellbremse, die im Folgenden mit Bezug auf die Figuren 2 bis 5 im Detail beschrieben wird.

Aus der Explosionsansicht der Figur 2 ergeben sich zunächst die Bestandteile der Feststellbremse und ihre Anordnung am bzw. im Gehäuse der Neigeeinheit 5. Die Figur zeigt ein Gehäuseseitenteil des Rotors 6, in dem eine Aufnahmebohrung 7 für einen Bremssattel 8 ausgebildet ist. Ebenfalls dargestellt sind eine Feststellschraube 9, ein Zylinderstift 10 sowie eine Bremsscheibe 11.

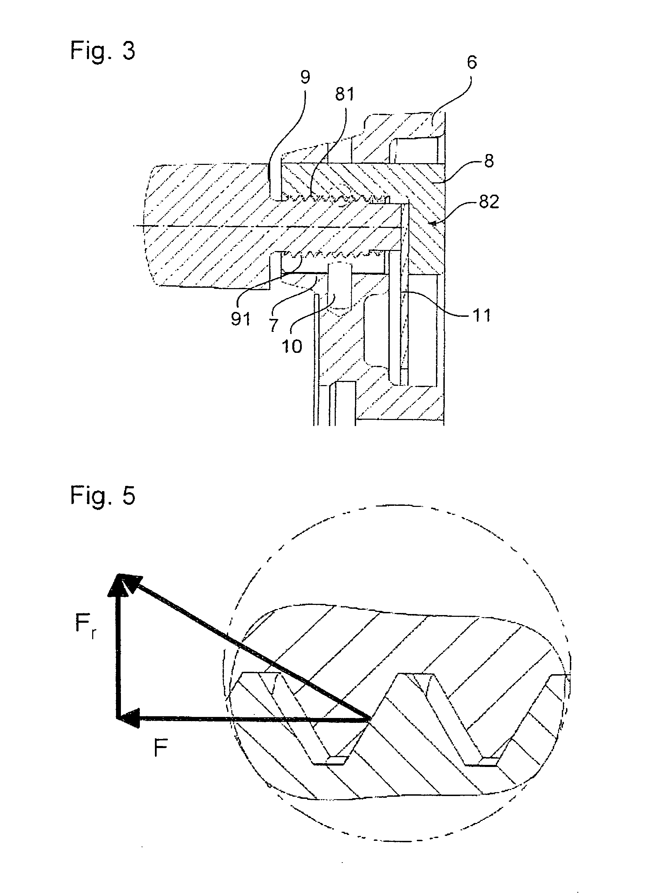

Figur 3 zeigt den eingebauten Zustand der Feststellbremse im Gehäuseseitenteil des Rotors 6. Der Bremssattel 8 ist in die Aufnahmebohrung 7 im Gehäuseseitenteil des Rotors 6 eingesetzt worden. Der Zylinderstift 10 verhindert eine Rotation des Bremssattels 8 in der Aufnahmebohrung 7. Der Bremssattel 8 verfügt über ein Innengewinde 81, das mit einem Außengewinde 91 an der Feststellschraube 9 zusammenwirkt. Zwischen einem innen liegenden Ende der Feststellschraube 9 und einem Bremsbacken 82, der Teil des Bremssattels 8 ist, befindet sich die Bremsscheibe 11.

Beim Festziehen der Feststellschraube 9 wird der Bremsbacken 82 axial gegen die Bremsscheibe 11 gezogen und arretiert den Rotor 6 und somit die Kamera 2 in der gewünschten Neigestellung.

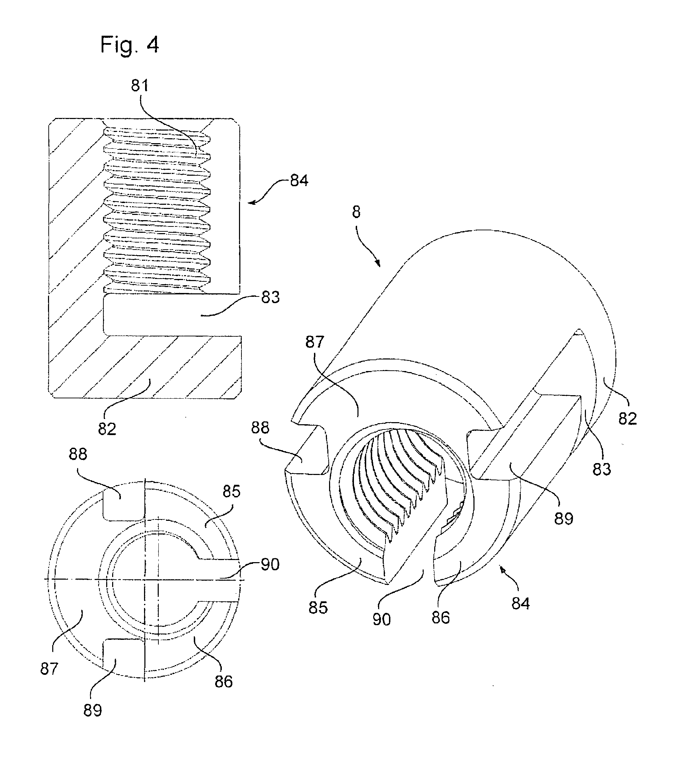

Wie sich insbesondere aus Figur 4 ergibt, ist der Bremssattel 8 prinzipiell als zylindrisches Bauteil ausgebildet. An einem ersten axialen Ende verfügt der Bremssattel 8 über den besagten Bremsbacken 82, der eine Bodenfläche des zylindrischen Bremssattels 8 bildet. An den Bremsbacken 82 schließt sich ein Spalt 83 zur Aufnahme der Bremsscheibe 11 an.

In axialer Richtung jenseits des Spalts 83 folgt ein Grundkörper 84 des Bremssattels 8. Der Grundkörper 84 ist derjenige Bereich des Bremssattels 8, der in die Aufnahmebohrung 7 im Gehäuseseitenteil des Rotors 6 eingesetzt wird. Im Grundkörper 84 ist eine Durchgangsbohrung ausgebildet, die in der vorliegenden Ausführungsform leicht exzentrisch bezüglich der Mittelachse des zylindrischen Bremssattels 8 angeordnet und mit einem Innengewinde 81 versehen ist. Der Grundkörper 84 und das Innengewinde 81 erstrecken sich von dem Spalt 83 bis zum anderen axialen Ende des Bremssattels 8.

Der Grundkörper 84 des Bremssattels 8 ist nun erfindungsgemäß so ausgestaltet, dass ein Spiel zwischen dem Bremssattel 8 und der Aufnahmebohrung 7 vermieden oder zumindest vermindert wird. Dazu ist der Grundkörper 84 des Bremssattels 8 mit zwei Flügeln 85 und 86 ausgebildet, die sich in Umfangsrichtung des Bremssattels 8 an einen Sattelabschnitt 87 anschließen. Die Flügel 85 und 86 sind dabei über relativ dünnwandige Abschnitte oder Minderungen 88 und 89 mit dem Sattelabschnitt 87 des Grundkörpers 84 verbunden, so dass eine gewisse radiale Auslenkung der Flügel 85 und 86 bezüglich des Sattelabschnitts 87 möglich ist. Die Flügel 85 und 86 sind ihrerseits durch eine axial verlaufende Spreizöffnung 90 voneinander getrennt, um die Beweglichkeit der Flügel 85 und 86 und somit die Aufweitung des Grundkörpers 84 radial auswärts in Richtung der Innenwand der Aufnahmeöffnung 7 (vgl. Fig. 3) zu ermöglichen. Die beiden Flügel 85 und 86, die Teil des Bremssattels 8 sind, bilden insofern einen Spreizabschnitt im Bereich des Außenumfangs des Grundkörpers 84 des Bremssattels 8.

Beim Anziehen der Feststellschraube 9 wird der Bremsbacken 82 des Bremssattels 8 gegen die Bremsscheibe 11 festgezogen. Dabei wird der Grundkörper 84 des Bremssattels 8 radial aufgeweitet. Um diese radiale Aufweitung des Grundkörpers 84 beim Anziehen der Feststellschraube 9 noch genauer zu erläutern, werden die in der Gewindepaarung zwischen Feststellschraube 9 und Bremssattel 8 wirkenden Kräfte nun mit Bezug auf Figur 5 beschrieben.

In Figur 5 ist ein Ausschnitt aus Figur 3 dargestellt, der das an der Feststellschraube 9 ausgebildete Außengewinde 91 im Eingriff mit dem in der Durchgangsbohrung des Grundkörpers 84 des Bremssattels 8 ausgebildeten Innengewinde 81 zeigt. Beim Anziehen der Feststellschraube 9 werden die Gewindeflanken des Innengewindes 81 und des Außengewindes 91 mit einer senkrecht zu den Flanken gerichteten Kraft F gegeneinander gepresst. Diese Kraft F hat eine axiale Komponente Fa sowie eine Radialkomponente Fr. Diese Radialkomponente Fr, die über den gesamten Umfang des Grundkörpers 84 des Bremssattels 8 wirkt, drückt die beweglichen Flügel 85 und 86 des Spreizbereichs 84 radial nach außen gegen die Wandung der Aufnahmebohrung 7 im Gehäuseseitenteil des Rotors 6. Durch diese Aufweitung des Grundkörpers 84 des Bremssattels 8 wird der Bremssattel 8 in der Aufnahmebohrung 7 festgeklemmt.

Zusammenfassend lässt sich feststellen, dass die radiale Auslenkung des Bremssattels 8 in Richtung der Innenwand der Aufnahmebohrung 7 in der ersten Ausführungsform durch die Zusammenwirkung der komplementären Keilflächen erfolgt, die durch das Außengewinde 91 und das Innengewinde 81 gebildet werden.

Die Figuren 6 bis 8 zeigen eine zweite bevorzugte Ausführungsform einer erfindungsgemäßen Feststellbremse.

Figur 6 zeigt einen Bremssattel 8' einer Feststellbremse gemäß der zweiten Ausführungsform. Ebenso wie der Bremssattel 8 der ersten Ausführungsform verfügt der Bremssattel 8' über einen Bremsbacken 82' sowie einen Grundkörper 84', die wiederum durch einen Spalt 83' zur Aufnahme der Bremsscheibe 11 voneinander in Axialrichtung des zylindrischen Bremssattels 8' getrennt sind. Wie sich aus Figur 6 ergibt, ist der Grundkörper 84' des Bremssattels 8' zu dem dem Bremsbacken 82' abgewandten Ende des Bremssattels 8' hin verjüngt, so dass eine Keilfläche 19 gebildet wird.

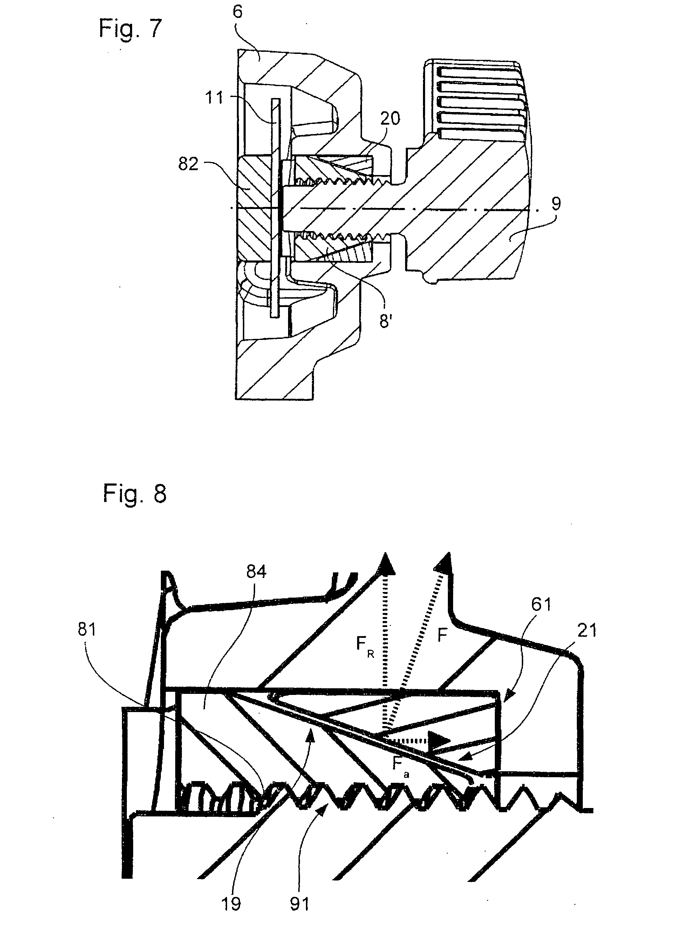

Die Anordnung des Bremssattels 8' und des Spreizrings 20 im Gehäuseseitenteil des Rotors 6 ergibt sich aus den Figuren 7 und 8. Hier wird deutlich, dass der Bremssattel 8' auch in dieser Ausführungsform über ein Innengewinde 81 verfügt, das mit einem Außengewinde 91 an der Feststellschraube 9 zusammenwirkt. Zwischen einem innen liegenden Ende der Feststellschraube 9 und dem Bremsbacken 82' befindet sich die Bremsscheibe 11. Beim Festziehen der Feststellschraube 9 wird der Bremsbacken 82' axial gegen die Bremsscheibe 11 gezogen und arretiert den Rotor 6 und somit die Kamera 2 in der gewünschten Neigestellung.

Die zweite Ausführungsform unterscheidet sich von der ersten insbesondere darin, dass der Spreizabschnitt, der beim Ineingriffbringen des Bremsbackens 82' mit der Bremsscheibe 11 radial auswärts in Richtung einer Innenwand der Aufnahmeöffnung 7 ausgelenkt wird, nicht integraler Bestandteil des Bremssattels 8' ist, sondern durch einen separaten Spreizring 20 gebildet wird.

Der Spreizring 20 hat eine im Wesentlichen zylindrische Außenumfangsfläche und eine kegelig ausgebildete Innenumfangsfläche, die eine zu der Keilfläche 19 komplementäre Keilfläche 21 bildet. In der vorliegenden Ausführungsform hat der Spreizring 20 außerdem einen radial verlaufenden Schlitz 22, um seine Verformung zu erleichtern.

Anders als gemäß der ersten Ausführungsform werden die für die radiale Auslenkung des Spreizabschnitts verantwortlichen Keilflächen daher nicht durch die Gewindepaarung zwischen Feststellschraube 9 und Bremssattel 8' gebildet, sondern durch die komplementären Keilflächen 19 und 21 am Außenumfang des Grundkörpers 84' des Bremssattels 8' bzw. am Innenumfang des Spreizrings 20.

Auch gemäß der zweiten Ausführungsform wird beim Anziehen der Feststellschraube 9 der Bremsbacken 82 des Bremssattels 8' gegen die Bremsscheibe 11 festgezogen. Dabei wird der Grundkörper 84' des Bremssattels 8' nach rechts in Fig. 7 und Fig. 8 gezogen. Die komplementären Keilflächen 19 und 21 am Außenumfang des Grundkörpers 84' des Bremssattels 8' bzw. am Innenumfang des Spreizrings 20 werden dadurch mit einer senkrecht zu diesen Keilflächen 19, 21 gerichteten Kraft F gegeneinander gepresst (Fig. 8). Diese Kraft F hat eine axiale Komponente Fa sowie eine Radialkomponente Fr. Da in der Aufnahmebohrung 7 ein Anschlag 61 für den Spreizring 20 ausgebildet ist, kann dieser sich nicht weiter in der axialen Richtung bewegen und wird über die beiden komplementären Keilflächen 19, 21 radial nach außen gegen die Wandung der Aufnahmebohrung 7 im Gehäuseseitenteil des Rotors 6 gedrückt. Dadurch wird der Bremssattel 8' in der Aufnahmebohrung 7 verkeilt.

Auf diese Art und Weise wird ein vergleichbarer Effekt erzielt wie bei der ersten Ausführungsform, und ein Spiel zwischen dem Bremssattel 8' und der Aufnahmeöffnung 7 wird vermieden oder zumindest vermindert.

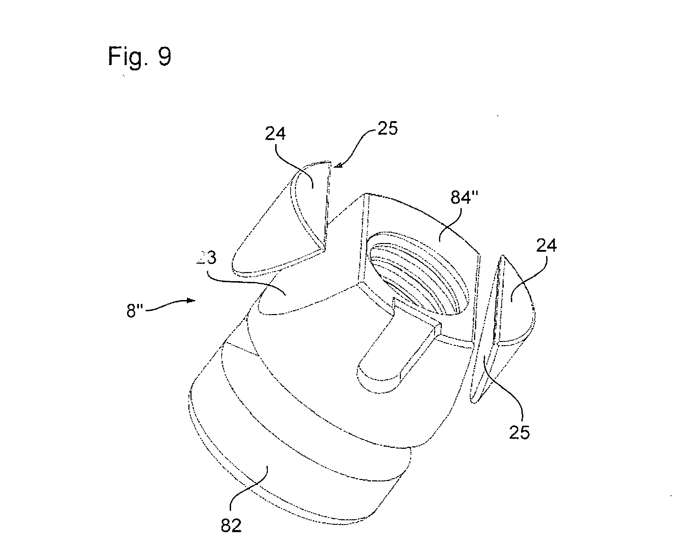

Ein Bremssattel 8" einer Feststellbremse gemäß einer dritten bevorzugte Ausführungsform der Erfindung ist in Figur 9 dargestellt. Die dritte Ausführungsform unterscheidet sich von der zweiten gemäß Fig. 6 bis 8 insofern, als statt des Spreizrings 20 nun zwei Keilelemente 24 vorgesehen sind. Als komplementäre Keilflächen sind dementsprechend zwei Schrägen 23 am Grundkörper 84 " des Bremssattels 8" vorgesehen, die mit komplementären Schrägen 25 an den Keilelementen 24 zusammenwirken.

Die Erfindung ist nicht auf die hier beschriebenen Ausführungsformen eingeschränkt, sondern kann im Bereich der anliegenden Patentansprüche modifiziert werden, beispielsweise wie folgt.

So könnte die Feststellbremse statt an der Neigeeinrichtung 5 grundsätzlich auch an der Schwenkeinrichtung 4 des Stativkopfs 1 vorgesehen sein, um die Kamera in einer bestimmten Schwenkstellung zu arretieren.

In der oben beschriebenen ersten Ausführungsform wird ein metrisches Gewinde 81, 91 mit einem Flankenwinkel von 60° verwendet. Wie sich aus Fig. 5 ergibt, ist die Radialkomponente Fr der Flankenkraft F daher kleiner als die Axialkomponente Fa. Alternativ könnte ein Gewinde mit einem Flankenwinkel von 45° verwendet werden; in diesem Fall wären Radial- und Axialkomponente gleich groß.

## Patentansprüche

1. Stativkopf (1), insbesondere für Film- oder Fernsehkameras, mit einer Feststellbremse umfassend:
einen im Wesentlichen zylinderförmigen Bremssattel (8, 8', 8"), der einen Grundkörper (84, 84', 84") zum Einbringen in eine in einem Gehäuseteil des Stativkopfs (1) ausgebildete Aufnahmeöffnung (7) und einen Bremsbacken (82) zum Eingriff mit einer im Stativkopf (1) vorgesehenen Bremsscheibe (11) aufweist, und
Feststellmitteln, um den Bremsbacken (82) in Eingriff und außer Eingriff mit der Bremsscheibe (11) zu bringen,
**dadurch gekennzeichnet, dass**
im Bereich des Außenumfangs des Grundkörpers (84, 84', 84") des Bremssattels (8, 8', 8") ein Spreizabschnitt vorgesehen ist, der beim Ineingriffbringen des Bremsbackens (82) mit der Bremsscheibe (11) radial auswärts in Richtung einer Innenwand der Aufnahmeöffnung (7) ausgelenkt wird.

2. Stativkopf nach Anspruch 1, bei welcher die radiale Auslenkung des Spreizabschnitts beim Ineingriffbringen des Bremsbackens (82) mit der Bremsscheibe (11) mittels zweier komplementärer und relativ zueinander beweglicher Keilflächen erfolgt.

3. Stativkopf nach Anspruch 1 oder 2, bei welcher die Feststellmittel eine Feststellschraube (9) mit einem Außengewinde (91) sind, das mit einem im Grundkörper (84, 84', 84") des Bremssattels (8, 8', 8") ausgebildeten Innengewinde (81) zusammenwirkt.

4. Stativkopf nach Anspruch 2 und 3, bei welcher das Außengewinde (91) an der Feststellschraube (9) und das Innengewinde (81) im Grundkörper (84) des Bremssattels (8) die beiden komplementären Keilflächen bilden.

5. Stativkopf nach einem der Ansprüche 1 bis 4, bei welcher der Spreizabschnitt ein integraler Bestandteil des Grundkörpers (84) des Bremssattels (8) ist, der beim Ineingriffbringen des Bremsbackens (82) mit der Bremsscheibe (11) zumindest teilweise in Richtung einer Innenwand der Aufnahmeöffnung (7) aufgeweitet wird.

6. Stativkopf nach Anspruch 5, bei welcher der Grundkörper (84) des Bremssattels (8) als Spreizabschnitt zumindest einen Flügel (85, 86) aufweist, welcher beim Ineingriffbringen des Bremssattels (8) mit der Bremsscheibe (11) in Richtung der Innenwand der Aufnahmeöffnung (7) auslenkbar ist.

7. Stativkopf nach einem der Ansprüche 1 und 2, bei welcher der Spreizabschnitt ein separates Spreizelement ist, das am Außenumfang des Grundkörpers (84', 84") des Bremssattels (8', 8'') angeordnet ist.

8. Stativkopf nach Anspruch 7, bei welcher als Spreizelement ein Spreizring (20) vorgesehen ist, der um den Außenumfang des Grundkörpers (84') des Bremssattels (8') herum angeordnet ist.

9. Stativkopf nach Anspruch 7, bei welcher als Spreizelement zumindest ein Keilelement (24) vorgesehen ist, das am Außenumfang des Grundkörpers (84") des Bremssattels (8") angeordnet ist.

10. Stativkopf nach einem der Ansprüche 7 bis 9, bei welcher die radiale Auslenkung des Spreizabschnitts beim Ineingriffbringen des Bremsbackens (82', 82") mit der Bremsscheibe (11) mittels zweier komplementärer Keilflächen erfolgt, von denen eine (21, 25) am Spreizelement und die andere (19, 23) am Grundkörpers (84', 84'') des Bremssattels (8', 8") ausgebildet ist.

## Claims

1. Tripod head (1), in particular for film cameras or television cameras, having a locking brake comprising:
an essentially cylindrical brake caliper (8, 8', 8") which has a base body (84, 84', 84") for introduction into a receiving opening (7) formed in a housing part of the tripod head (1) and a brake block (82) for engagement with a brake disc (11) provided in the tripod head (1), and locking means to engage and disengage the brake block (82) with/from the brake disc (11), **characterised in that** in the region of the outer periphery of the base body (84, 84', 84") of the brake caliper (8, 8', 8"), an expansion section is provided which is deflected radially outwards in the direction of an inner wall of the receiving opening (7) when engaging the brake block (82) with the brake disc (11).

2. Tripod head according to claim 1, in which the radial deflection of the expansion section is effected by means of two complementary wedge surfaces which can be moved relative to one another when engaging the brake block (82) with the brake disc (11).

3. Tripod head according to claim 1 or 2, in which the locking means are a locking screw (9) with an external thread (91) which cooperates with an internal thread (81) formed in the base body (84, 84', 84") of the brake caliper (8, 8', 8").

4. Tripod head according to claim 2 and 3, in which the external thread (91) on the locking screw (9) and the internal thread (81) in the base body (84) of the brake caliper (8) form the two complementary wedge surfaces.

5. Tripod head according to one of claims 1 to 4, in which the expansion section is an integral component of the base body (84) of the brake caliper (8) which is widened at least partly in the direction of an inner wall of the receiving opening (7) when engaging the brake block (82) with the brake disc (11).

6. Tripod head according to claim 5, in which the base body (84) of the brake caliper (8) has as the expansion section, at least one lobe (85, 86) which can be deflected in the direction of the inner wall of the receiving opening (7) when engaging the brake caliper (8) with the brake disc (11).

7. Tripod head according to one of claims 1 and 2, in which the expansion section is a separate expansion element which is arranged on the outer periphery of the base body (84', 84") of the brake caliper (8', 8").

8. Tripod head according to claim 7, in which an expansion ring (20), which is arranged around the outer periphery of the base body (84') of the brake caliper (8'), is provided as the expansion element.

9. Tripod head according to claim 7, in which at least one wedge element (24), which is arranged on the outer periphery of the base body (84") of the brake caliper (8"), is provided as the expansion element.

10. Tripod head according to one of claims 7 to 9, in which the radial deflection of the expansion section when engaging the brake block (82'; 82") with the brake disc (11) is effected by means of two complementary wedge surfaces, of which one (21, 25) is formed on the expansion element and the other (19, 23) is formed on the base body (84', 84") of the brake caliper (8', 8").

## Revendications

1. Tête de trépied (1), notamment pour des caméras de cinéma ou de télévision, munie d'un frein d'immobilisation comprenant :
- un étrier de frein (8, 8', 8"), globalement cylindrique, qui comporte un corps (84, 84', 84") destiné à être inséré dans une ouverture de logement (7) conçue dans une partie formant boîtier de la tête de trépied (1) et une mâchoire de frein (82) destinée à venir en prise avec un disque de frein (11) prévu dans la tête de trépied (1)
- et des moyens d'immobilisation pour mettre en prise la mâchoire de frein (82) avec le disque de frein (11) ou la mettre hors de prise de celui-ci,
**caractérisée en ce qu'**il est prévu dans la zone de la circonférence extérieure du corps (84, 84', 84") de l'étrier de frein (8, 8', 8") une partie d'écartement qui, lorsque la mâchoire de frein (82) est mise en prise avec le disque de frein (11), est déployée de façon radiale vers l'extérieur en direction d'une paroi intérieure de l'ouverture de logement (7).

2. Tête de trépied selon la revendication 1, dans laquelle le déploiement radial de la partie d'écartement lorsque la mâchoire de frein (82) est mise en prise avec le disque de frein (11) s'effectue au moyen de deux surfaces en coin complémentaires et mobiles l'une par rapport à l'autre.

3. Tête de trépied selon la revendication 1 ou 2, dans laquelle les moyens d'immobilisation sont une vis d'immobilisation (9) avec un filetage extérieur (91) qui coopère avec un filetage intérieur (81) conçu dans le corps (84, 84', 84") de l'étrier de frein (8, 8', 8").

4. Tête de trépied selon les revendications 2 et 3, dans laquelle le filetage extérieur (91) sur la vis d'immobilisation (9) et le filetage intérieur (81) dans le corps (84) de l'étrier de frein (8) forment les deux surfaces en coin complémentaires.

5. Tête de trépied selon l'une des revendications 1 à 4, dans laquelle la partie d'écartement est une partie intégrante du corps (84) de l'étrier de frein (8) qui, lorsque la mâchoire de frein (82) est mise en prise avec le disque de frein (11), est au moins en partie élargie en direction d'une paroi intérieure de l'ouverture de logement (7).

6. Tête de trépied selon la revendication 5, dans laquelle le corps (84) de l'étrier de frein (8) comporte comme partie d'écartement au moins une aile (85, 86) qui, lorsque l'étrier de frein (8) est mis en prise avec le disque de frein (11), peut être déployée en direction de la paroi intérieure de l'ouverture de logement (7).

7. Tête de trépied selon l'une des revendications 1 et 2, dans laquelle la partie d'écartement est un élément d'écartement séparé qui est agencé sur la circonférence extérieure du corps (84', 84") de l'étrier de frein (8', 8").

8. Tête de trépied selon la revendication 7, dans laquelle est prévu comme élément d'écartement un anneau d'écartement (20) qui est agencé autour de la circonférence extérieure du corps (84') de l'étrier de frein (8').

9. Tête de trépied selon la revendication 7, dans laquelle est prévu comme élément d'écartement au moins un élément en coin (24) qui est agencé sur la circonférence extérieure du corps (84") de l'étrier de frein (8").

10. Tête de trépied selon l'une des revendications 7 à 9, dans laquelle le déploiement radial de la partie d'écartement lorsque la mâchoire de frein (82', 82") est mise en prise avec le disque de frein (11) s'effectue au moyen de deux surfaces en coin complémentaires dont l'une (21, 25) est conçue sur l'élément d'écartement et l'autre (19, 23) sur le corps (84', 84") de l'étrier de frein (8', 8").
